(19) Europäisches Patentamt
European Patent Office
Office européen des brevets

(11) **EP 4 468 641 A1**

(12) **EUROPEAN PATENT APPLICATION**

(43) Date of publication:
**27.11.2024 Bulletin 2024/48**

(21) Application number: **24177281.3**

(22) Date of filing: **22.05.2024**

(51) International Patent Classification (IPC):
*H04L 5/00* (2006.01)          *H04W 52/02* (2009.01)

(52) Cooperative Patent Classification (CPC):
**H04L 5/0048; H04L 5/0053;** H04W 52/0229;
H04W 52/028

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.05.2023 KR 20230065885
01.08.2023 KR 20230100701**

(71) Applicant: **Samsung Electronics Co., Ltd.
Suwon-si, Gyeonggi-do 16677 (KR)**

(72) Inventors:
• **WANG, Woowan**
**16677 Suwon-si (KR)**
• **KIM, Joohan**
**16677 Suwon-si (KR)**
• **KIM, Beomkon**
**16677 Suwon-si (KR)**
• **DO, Joohyun**
**16677 Suwon-si (KR)**
• **HAN, Jungsu**
**16677 Suwon-si (KR)**

(74) Representative: **Marks & Clerk LLP
15 Fetter Lane
London EC4A 1BW (GB)**

(54) **CONTROL SIGNAL RECEIVING DEVICE AND ITS OPERATION METHOD**

(57)    An operation method of a wireless communication device includes receiving a control signal, measuring a power amount of each respective resource element group (REG) among a plurality of REG bundles to obtain a plurality of power amounts, the plurality of REG bundles being included in the control signal, comparing a first power amount with threshold power value, the first power amount being a largest power amount among the plurality of power amounts, and decoding the control signal in response to determining the first power amount is greater than the threshold power value.

FIG. 3

**Description**

BACKGROUND

The inventive concepts relate to a wireless communication device that receives a control signal.
A wireless communication device may obtain downlink control information (DCI) by receiving a control signal from a base station and decoding the control signal.
The DCI may have various formats, and the wireless communication device is unable to determine the format of the DCI in advance. In addition, the DCI may be transmitted through any time/frequency resource within a set of time/frequency resources defined as a search space, and the wireless communication device is unable to determine an exact time/frequency resource that is transmitted in advance. The wireless communication device may obtain control DCI by performing blind decoding. Blind decoding may refer to an operation in which a terminal performs decoding on a downlink control channel for the formats of all possible downlink control channels and all possible time/frequency resource combinations within a given search space.

SUMMARY

The inventive concepts provide a wireless communication device that receives a control signal, by which power consumption related to blind decoding is reduced.
According to an aspect of the inventive concepts, there is provided an operation method of a wireless communication device, the operation method including receiving a control signal, measuring a power amount of each respective resource element group (REG) bundle among a plurality of REG bundles to obtain a plurality of power amounts, the plurality of REG bundles being included in the control signal, comparing a first power amount with threshold power value, the first power amount being a largest power amount among the plurality of power amounts, and decoding the control signal in response to determining the first power amount is greater than the threshold power value.
According to an aspect of the inventive concepts, there is provided an operation method of a wireless communication device, the operation method including receiving and decoding a first control signal to obtain a decoded first control signal, obtaining allocation information of a second control signal from the decoded first control signal, measuring a power amount of each respective resource element group (REG) bundle among a plurality of REG bundles to obtain a plurality of power amounts, the plurality of REG bundles being included in the second control signal, and the measuring being performed based on the allocation information, comparing a first power amount with a threshold power value to obtain a comparison result, the first power amount being a largest power amount among the plurality of power amounts, and determining whether to decode the second control signal based on the comparison result.
According to an aspect of the inventive concepts, there is provided a wireless communication device including processing circuitry configured to receive a control signal, measure a power amount of each respective resource element group (REG) bundle among a plurality of REG bundles to obtain a plurality of power amounts, the plurality of REG bundles being included in the control signal, compare a first power amount with threshold power value to obtain a comparison result, the first power amount being a largest power amount among the plurality of power amounts, cause at least a portion of the wireless communication device to enter a sleep mode based on the comparison result, and skip decoding of the control signal based on the at least the portion of the wireless communication device entering the sleep mode.
A resource element group bundle may be bundle of resource element groups. A resource element group may be a group of resource elements. Each resource element may represent a single subcarrier in the frequency domain and a single symbol (e.g. Orthogonal Frequency-Division Multiplexing (OFDM) symbol) in the time domain. A resource element group may be a contiguous group of resource elements in the frequency domain. A resource element group may be made up of one or more resource blocks (e.g. one or more contiguous resource blocks). Each resource block may be a contiguous group of resource elements. Accordingly, a resource element group may be made up of a contiguous group of resource blocks. A resource element group bundle may comprise one or more (e.g. a plurality) of resource element groups. Accordingly, a resource element group bundle may comprise a plurality of resource blocks.
At least some of the above and other features of the invention are set out in the claims.

BRIEF DESCRIPTION OF THE DRAWINGS

Embodiments will be more clearly understood from the following detailed description taken in conjunction with the accompanying drawings in which:

FIG. 1 is a block diagram of a wireless communication device according to embodiments;
FIG. 2A is a block diagram of a wireless communication device according to embodiments;

FIG. 2B shows the temporal sequence of energy detection of the control signal and control signal decoding;

FIG. 3 is a flowchart of an operation, performed by a wireless communication device, of determining whether to decode a control signal based on energy detection of the control signal, according to embodiments;

FIG. 4A is a flowchart of an operation, performed by a wireless communication device, of determining whether to decode a control signal based on largest power among respective pieces of measured power of resource element group bundles (REG bundles), according to embodiments;

FIG. 4B is a graph showing a control channel including a control signal according to embodiments;

FIGS. 4C and 4D are graphs showing CORESET 0 and CORESET 1, respectively;

FIG. 5 is a flowchart of an operation, performed by a wireless communication device, of determining whether to receive data based on control signal energy detection, according to embodiments;

FIG. 6 is a flowchart of an operation, performed by a wireless communication device, of entering a sleep mode, according to embodiments;

FIG. 7 is a flowchart of an operation of a wireless communication device according to embodiments;

FIG. 8 is a block diagram of a wireless communication device according to embodiments; and

FIG. 9 is a block diagram of an electronic device according to embodiments.

DETAILED DESCRIPTION

A base station (BS) is an entity that communicates with a wireless communication device and allocates communication network resources to the wireless communication device, and may be one of a cell, a NodeB (NB), an evolved Node B (eNB), a next generation node B (gNB), a next generation radio access network (NG RAN), a radio access unit, a base station controller, and/or a node on a network.

The wireless communication device is an entity that communicates with a base station and/or other wireless communication devices, and may be one of a node, user equipment (UE), next generation UE (NG UE), a mobile station (MS), mobile equipment (ME), a device, and/or a terminal

The wireless communication device may include at least one of a smartphone, a tablet personal computer (PC), a mobile phone, a video phone, an e-book reader, a desktop PC, a laptop PC, a netbook computer, a personal digital assistant (PDA), a portable multimedia player (PDP), an MP3 player, a medical device, a camera, and/or a wearable device. The wireless communication device may include at least one of a television (TV), a digital video disk (DVD) player, audio equipment, a refrigerator, an air conditioner, a vacuum cleaner, an oven, a microwave oven, a washing machine, an air cleaner, a set-top box, a home automation control panel, a security control panel, a media box (e.g., Samsung HomeSync®, Apple TV®, or Google TV®), a game console (e.g., Xbox® or PlayStation®), an electronic dictionary, an electronic key, a camcorder, and/or an electronic frame. The wireless communication device may also include at least one of various medical equipment (e.g., various portable medical measurement systems, such as a blood sugar measurement device, a heartbeat measurement device, a blood pressure measurement device, a body temperature measurement device, a magnetic resonance angiography (MRA) device, a magnetic resonance imaging (MRI) device, a computed tomography (CT) device, an imaging device, and/or an ultrasonic device), a navigation system, a global navigation satellite system (GNSS), an event data recorder (EDR), a flight data recorder (FDR), a vehicle infotainment device, electronic equipment for ships (e.g., a navigation system and/or a gyro compass for ships), avionics, a security device, a vehicle head unit, an industrial or home robot, a drone, an automatic teller machine (ATM) of a financial institution, a point of sales (POS) device in a shop, and/or an Internet of Things (IoT) device (e.g., light bulbs, various sensors, sprinkler devices, fire alarm devices, thermostats, streetlights, toasters, exercise machines, hot-water tanks, heaters, boilers, etc.). In addition, the wireless communication device may include various types of multi-media systems capable of performing communication functions.

Hereinafter, the inventive concepts will be described more fully with reference to the accompanying drawings, in which embodiments of the inventive concepts are shown.

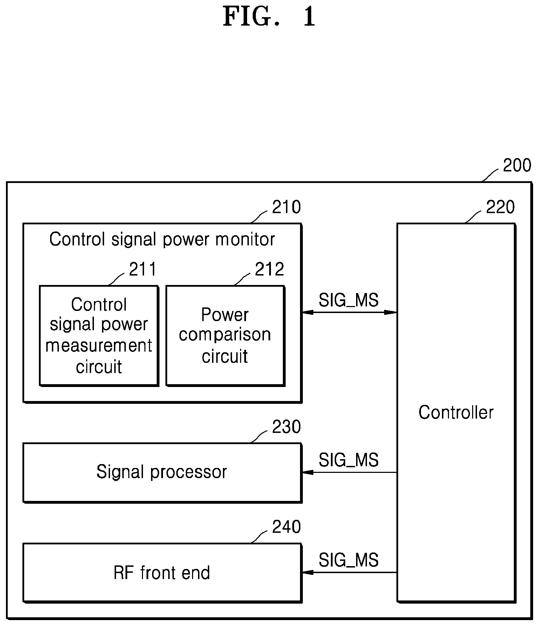

FIG. 1 is a block diagram of a wireless communication device according to embodiments.

Referring to FIG. 1, a wireless communication device 200 according to embodiments includes a control signal power monitor 210, a controller 220, a signal processor 230, and/or a radio frequency (RF) front end 240. The control signal power monitor 210 may include a control signal power measurement circuit 211 and/or a power comparison circuit 212.

The wireless communication device 200 may receive a control signal and/or a data signal from a base station. The wireless communication device 200 may obtain control information by decoding the control signal. For example, the wireless communication device 200 may receive a physical downlink control channel (PDCCH) from the base station and may perform deinterleaving, deprecoding, symbol combining, symbol demodulation, and/or descrambling on the PDCCH through at least one of the RF front end 240 and/or the signal processor 230. After the wireless communication device 200 performs deinterleaving, deprecoding, symbol combining, symbol demodulation, and/or descrambling, the wireless communication device 200 may perform blind decoding of a PDCCH payload, because the wireless communication device 200 is unaware of the structure of a detailed control channel. The wireless communication device 200 may obtain downlink control information (DCI) by decoding the PDCCH. When no control information (e.g., DCI) is present as a result of the wireless communication device 200 decoding the control signal, the wireless communication device 200 may reduce power consumption by changing (e.g., switching) the control signal power monitor 210, the signal processor 230, and/or the RF front end 240 to a sleep mode (e.g., from an active mode). According to embodiments, for example, entry into the sleep mode as described herein may include skipping performance of one or more decoding operations described herein as being performable by the control signal power monitor 210, the signal processor 230 and/or the RF front end 240.

The wireless communication device 200 according to the inventive concepts may perform blind decoding on the PDCCH (physical downlink control channel) when control information (e.g., DCI) exists as a result of detecting (e.g., as determined by detecting) the energy of the control signal and may not perform blind decoding when control information does not exist as a result of detecting (e.g., as determined by detecting) the energy of the control signal. Accordingly, power consumption of the wireless communication device 200 according to the inventive concepts may be reduced. This will now be described in more detail.

According to embodiments, the signal processor 230 (and/or the control signal power monitor 210) may receive a control signal from the RF front end 240. The control signal power monitor 210 may measure a first power of each of a plurality of resource element group bundles (REG bundles) of the control signal, select a second power (e.g. a largest power) that is largest among the first powers, compare the second power with a threshold power, and generate a sleep signal SIG_MS based on a result of the comparison. For example, the control signal power measurement circuit 211 may measure the first power and select the second power, and the power comparison circuit 212 may compare the second power with the threshold power. When the second power is greater than the threshold power, the control signal power monitor 210 does not generate the sleep signal SIG_MS and the signal processor 230 decodes the control signal. When the second power is less than or equal to the threshold power, the control signal power monitor 210 may generate the sleep signal SIG_MS and may transmit the sleep signal SIG_MS to the controller 220. The controller 220 may receive the sleep signal SIG_MS from the control signal power monitor 210 and may transmit the sleep signal SIG_MS to at least one of the signal processor 230, the RF front end 240, and/or the control signal power monitor 210. In response to the sleep signal SIG_MS, at least one of the signal processor 230, the RF front end 240, and/or the control signal power monitor 210 may enter the sleep mode and may not decode the control signal. According to embodiments, for example, the controller 220 may cause at least a portion of the wireless communication device 200 (e.g., the signal processor 230, the RF front end 240 and/or the control signal power monitor 210) to enter the sleep mode in response to determining the second power is less than or equal to the threshold power.

In other words, the wireless communication device 200 according to embodiments may determine the presence or absence of the control information without decoding the control information. The wireless communication device 200 may generate a sleep signal based on the presence or absence of the control information. The wireless communication device 200 may not perform blind decoding when the control information is not included in the control signal. When the control information is not included in the control signal, the wireless communication device 200 may not receive data related to the control information. The wireless communication device 200 may reduce power consumption of the wireless communication device 200 by not performing blind decoding on PDCCH when there is no control information.

As used herein, the terms "first", "second", "third", etc. are used to simply distinguish a corresponding component, step or parameter from another and does not limit the components, steps or parameters in any other aspect (e.g., importance or order).

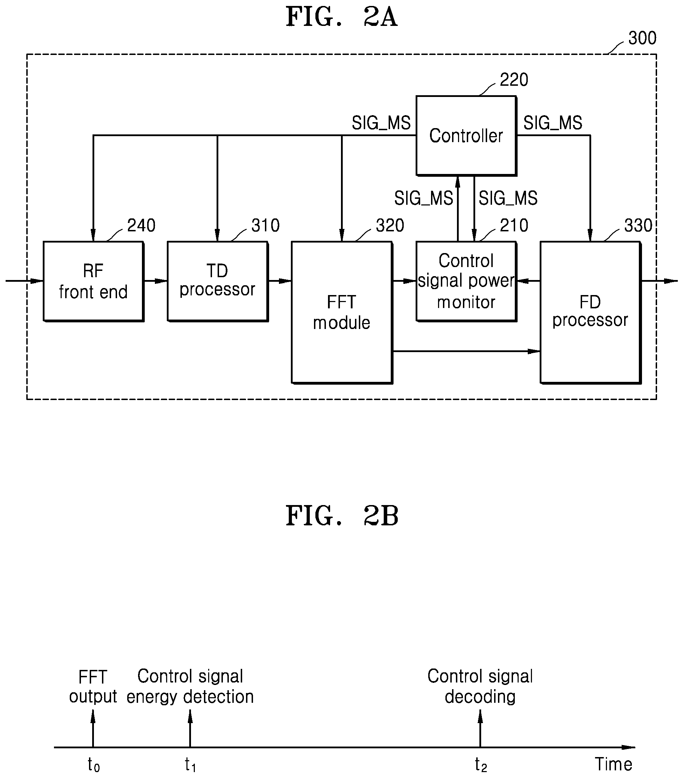

FIG. 2A is a block diagram of a wireless communication device 300 according to embodiments. FIG. 2B shows the temporal sequence of energy detection of the control signal and control signal decoding.

Referring to FIG. 2A, the wireless communication device 300 according to embodiments includes a control signal power monitor 210, a controller 220, an RF front end 240, a time domain (TD) processor 310, a fast Fourier transform (FFT) module 320, and/or a frequency domain (FD) processor 330. The wireless communication device 300 typically includes functions for receiving signals in a communication system, and may further include circuits that perform other additional functions. According to embodiments, the control signal power monitor 210, the controller 220 and/or the RF front end 240 discussed in connection with FIG. 2A may be the same as or similar to the control signal power monitor 210, the controller 220 and/or the RF front end 240, respectively, discussed in connection with FIG. 1.

The RF front end 240 may receive a signal from a base station and transmit a TD signal to the TD processor 310. The TD processor 310 may transmit a TD signal of an FFT size to the FFT module 320. The FFT module 320 may convert the TD signal into a FD signal by performing an FFT operation, and may transmit the FD signal to the control signal power monitor 210 and the FD processor 330. The FD processor 330 may perform demodulation and decoding.

The control signal power monitor 210 may receive information related to the control signal from the FD processor 330. The information related to the control signal may include location information (e.g. position information) of the control signal included in a reception signal. For example, the information related to the control signal may include a bitmap indicating a location of the control signal. The control signal power monitor 210 may determine presence or absence of the control information by performing energy detection on the control signal by using the information related to the control signal. For example, the control signal power monitor 210 may measure power of the control signal by using the bitmap indicating the location of the control signal and may determine the presence or absence of the control information, based on the measured power of the control signal. The bitmap may include frequency allocation information of the control signal. The control signal power monitor 210 may determine that there is no control information based on the measured power and may generate the sleep signal SIG_MS. The control signal power monitor 210 may enter the sleep mode after transmitting the sleep signal SIG_MS to the controller 220, or may enter the sleep mode after receiving the sleep signal SIG_MS from the controller 220.

The controller 220 may transmit the sleep signal SIG_MS to at least one of the RF front end 240, the TD processor 310, the FFT module 320, and/or the FD processor 330. At least one of the RF front end 240, the TD processor 310, the FFT module 320, and/or the FD processor 330 may receive the sleep signal SIG_MS and may enter the sleep mode. In detail, the RF front end 240, which may be an analog block, may be powered off in response to the sleep signal SIG_MS. In response to the sleep signal SIG_MS, the TD processor 310, the FFT module 320, and/or the FD processor 330, which may be digital blocks, may not perform an operation related to signal reception.

Referring to FIG. 2B, the control signal power monitor 210 receives the FD signal output by the FFT module 320 at time $t_0$. The control signal power monitor 210 may perform control signal energy detection to determine the presence or absence of the control information, based on the information related to the location of the control signal received from the FD processor 330, until time $t_1$. For example, the control signal power monitor 210 may measure power for the control information from time $t_0$ to time $t_1$ by using a bitmap indicating the frequency allocation information of the control information.

In addition, the FD processor 330 may receive the FD signal from the FFT module 320 at time to. When the FD processor 330 does not receive the sleep signal SIG_MS, the FD processor 330 may perform decoding on the control signal until time $t_2$. Power reduction of the wireless communication device 300 according to the inventive concepts will now be described.

The wireless communication device 300 may not perform blind decoding when the reception signal includes no control information, and thus power consumption of the wireless communication device 300 may be reduced. In detail, $P_E$ refers to the power consumed by the wireless communication device 300 for energy detection of the control signal. $P_D$ refers to the power consumed by the wireless communication device 300 for decoding of the control signal. Ps refers to standby power that is consumed by the RF front end 240, the TD processor 310, the FFT module 320, the control signal power monitor 210, and/or the FD processor 330 until the control signal is decoded, e.g., during $t_2$-$t_1$. The wireless communication device 300 may reduce power consumption of the wireless communication device 300 that is as much as $P_S+P_D-P_E$. In other words, the wireless communication device 300 consumes more power to perform control signal energy detection but may reduce the standby power of the wireless communication device 300 by making the RF front end 240, the TD processor 310, the FFT module 320, the control signal power monitor 210, and/or the FD processor 330 enter the sleep mode, and may reduce decoding power by not performing blind decoding on PDCCH.

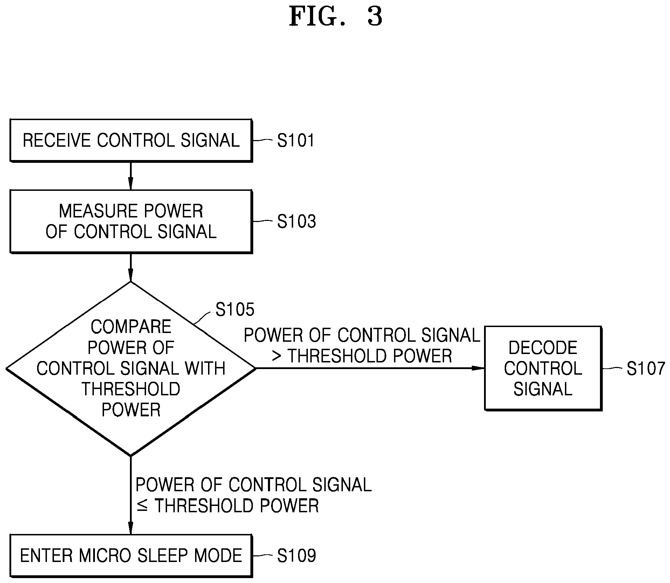

FIG. 3 is a flowchart of an operation, performed by a wireless communication device, of determining whether to decode a control signal based on energy detection of the control signal, according to embodiments.

Referring to FIG. 3, in operation S 101, the wireless communication device 200 may receive the control signal. According to embodiments, the wireless communication device 200 may receive the control signal from a base station. The control signal may include downlink control information (DCI).

In operation S 103, the wireless communication device 200 may measure the power of the control signal. In other words, the wireless communication device 200 may perform energy detection with respect to the control signal. According to embodiments, the wireless communication device 200 may measure at least one power amount (e.g., a signal power magnitude, a signal power amplitude, a signal power level, etc.) of the control signal.

In operation S 105, the wireless communication device 200 may compare the power of the control signal with the threshold power (e.g., a threshold power value). According to embodiments, the threshold power value may be a threshold power amount (e.g., a threshold signal power magnitude, a threshold signal power amplitude, a threshold signal power level, etc.).

In operation S 107, the wireless communication device 200 may decode the control signal when the power of the control signal (e.g., the at least one power amount) is greater than the threshold power. That is, in response to determining that the power of the control signal (e.g., the at least one power amount) is greater than the threshold power, the wireless communication device 200 decodes the control signal.

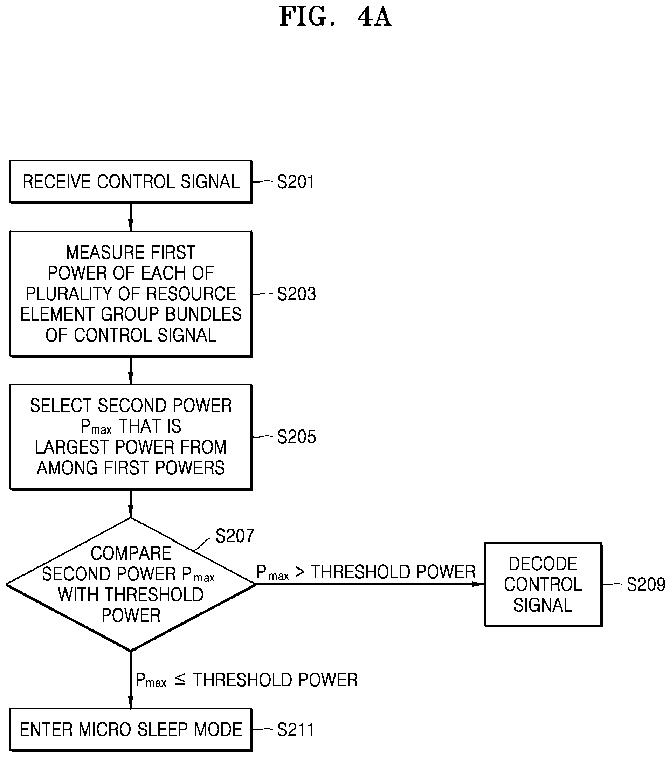

In operation S 109, the wireless communication device 200 may enter a micro sleep mode when the power of the control signal is less than or equal to the threshold power. That is, in response to determining that the power of the control signal (e.g., the at least one power amount) is less than or equal to the threshold power, the wireless communication device 200 may enter a sleep mode (e.g. a micro sleep mode). Accordingly, the wireless communication device 200 may stop standby operations of circuits related to reception of the control signal. According to embodiments, the operations discussed in connection with FIG. 3, as well as those discussed in connection with FIGS. 4A, 5, 6 and/or 7, may be performed iteratively. In such cases, operations performed in response to different control signals may vary. For example, with respect to operations discussed in connection with FIG. 3, a comparison result of operation S105 may result in performance of operation S 107 for a first control signal and performance of operation S109 for a second control signal.

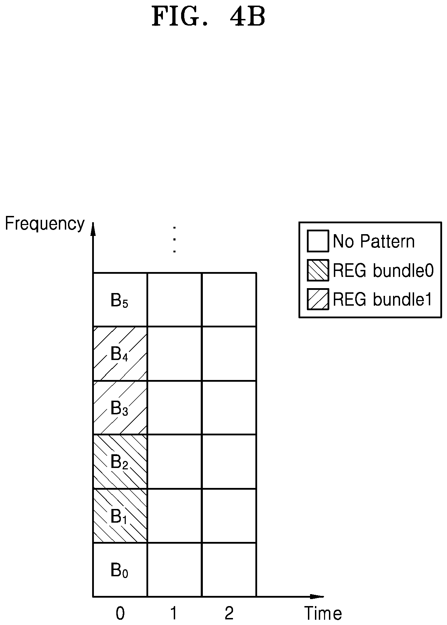

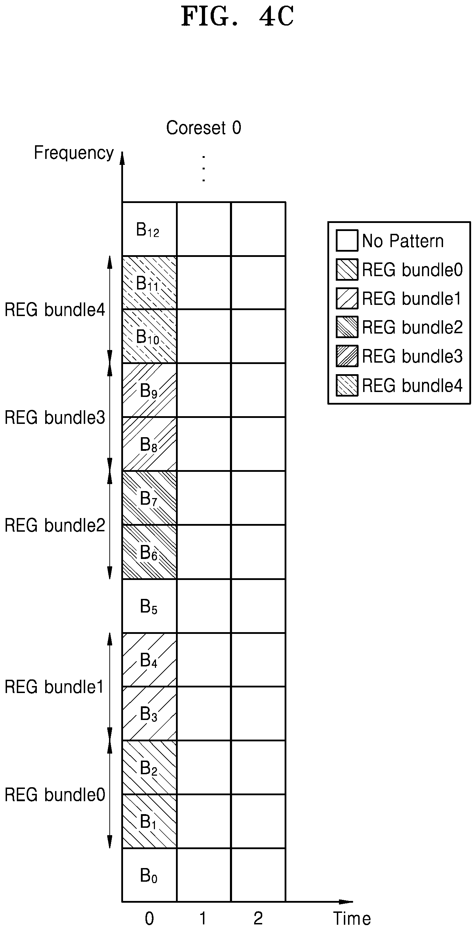

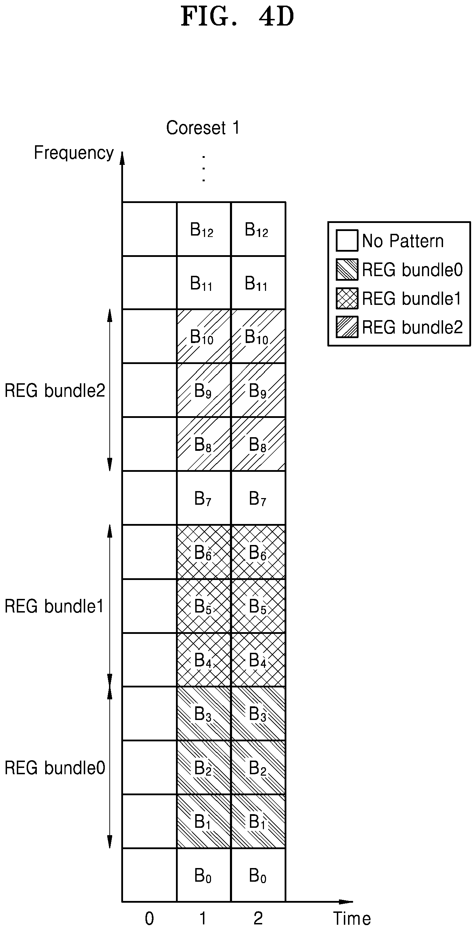

FIG. 4A is a flowchart of an operation, performed by a wireless communication device, of determining whether to decode a control signal based on a largest power among respective power measurements of REG bundles, according to embodiments. FIG. 4B is a graph showing a control channel including a control signal according to embodiments. FIGS. 4C and 4D are graphs showing CORESET 0 and CORESET 1, respectively. FIGS. 4A and 4B will now be described in conjunction with FIG. 1.

Referring to FIG. 4A, in operation S201, the wireless communication device 200 may receive the control signal (e.g., from the base station). The control signal may include downlink control information (DCI). The wireless communication device 200 may perform energy detection with respect to the control signal. For example, the wireless communication device 200 may perform energy detection by measuring reception power (e.g. received power) of the control signal.

The wireless communication device 200 may receive information related to the location of the control signal from the base station. For example, the wireless communication device 200 may receive a radio resource control (RRC) signal including the information related to the location of the control signal from the base station. This information may specify a location (e.g. a position) of the control signal within resource space (e.g. within time space and/or frequency space). For instance, location information may specify a particular set of one or more resource elements for the control signal. The RRC signal may include the CORESET's FD resource allocation information and the CORESET's TD resource allocation information. The CORESET's FD resource allocation information may be bitmap information. According to embodiments, the RRC signal, and/or the CORESET's FD and/or TD resource allocation information may indicate the plurality of REG bundles of the control signal. The wireless communication device 200 may perform energy detection with respect to the control signal by using the information related to the location of the control signal. In other words, the wireless communication device 200 may measure the power of the control signal to determine whether the control signal includes the control information. The measurement of the power for the control signal will now be described in detail.

In operation S203, the wireless communication device 200 may measure the power (e.g. the first power) of each of the plurality of REG bundles of the control signal. The plurality of REGs bundles may each comprise one or more of REGs. According to embodiments, the wireless communication device 200 may measure at least one power amount (e.g., a signal power magnitude, a signal power amplitude, a signal power level, etc.) of the control signal. According to embodiments, the wireless communication device 200 may measure a power amount of each respective resource element group (REG) bundle among a plurality of REG bundles of the control signal to obtain a plurality of power amounts (e.g. power measurements).

For example, the wireless communication device 200 may measure a power (e.g. a third power) of each of a plurality of resource blocks (RBs) of the control signal. The wireless communication device 200 may calculate the first power by using the third power. In other words, the wireless communication device 200 may obtain the power of an REG or an REG bundle by measuring the power of RBs within that REG or REG bundle. According to embodiments, a power amount of an REG or REG bundle may be combination (e.g., a sum, an average or a median) of the measured power amounts of the RBs making up the REG or REG bundle. The wireless communication device 200 may measure the power amount of each respective REG or REG bundle by determining the combination of the measured power amounts of the RBs making up the respective REG or REG bundle.

For example, the wireless communication device 200 may measure power for each control resource set (CORESET). When the REG bundles include first REG bundles and second REG bundles, the first REG bundles may be included in a first CORESET and the second REG bundles may be included in a second CORESET. In this disclosure, the REGs may refer to REG bundles depending on the context. For instance, an REG bundle may be a group of one or more REGs. Accordingly, the term "REGs" and "REG bundles" may, in some instances, be used interchangeably. Nevertheless, in general, the methods described herein can determine the power of a plurality of RBs in a set (e.g. one or more REGs or one or more REG bundles) by accumulating power values for each RB (e.g. calculating a sum or average) in the set. The wireless communication device 200 may measure a power (e.g. a fourth power) of each REG bundle for the first REG bundles and may measure a power (e.g. a fifth power) of each REG bundle for the second REG bundles. The wireless communication device 200 may select a largest power (Pmax) between the fourth power and the fifth power. According to embodiments, the wireless communication device 200 may measure a power amount for each of the first REG bundles (first power amounts) and a power amount for each of the second REG bundles (second power amounts). According to embodiments, for example, the wireless communication device 200 may determine the largest power (Pmax) as a largest power amount from among the all of the first power amounts and the second power amounts.

In operation S205, the wireless communication device 200 may select (e.g., calculate, determine, etc.) a second power Pmax that is a largest power among first power amounts (e.g., among the plurality of power amounts of the plurality of REG bundles).

In operation S207, the wireless communication device 200 may compare the second power Pmax with the threshold power (e.g., the threshold power value). The threshold power may be determined (e.g., by the wireless communication device 200) based on a signal to interference ratio (SINR). According to embodiments, the signal to interference ratio (SINR) as used herein may refer to a signal-to-interference ratio and/or a signal-to-interference-plus-noise ratio. For example, the threshold power may be determined (e.g., by the wireless communication device 200) based on at least one of an average power level of the control signal, a gain of the control signal, and/or the SINR (e.g., the SINR of the control signal).

In operation S209, when the second power Pmax is greater than the threshold power (e.g., in response to determining the second power Pmax is greater than the threshold power), the wireless communication device 200 may decode the control signal. When the second power Pmax is not greater than the threshold power (e.g., in response to determining the second power Pmax is less than or equal to the threshold power), the wireless communication device 200 may not decode the control signal.

In operation S211, when the second power Pmax is less than or equal to the threshold power, the wireless communication device 200 may enter the micro sleep mode.

Referring to FIG. 4B, the control channel including the control signal according to embodiments may include resource blocks $B_0$, $B_1$, $B_2$, $B_3$, $B_4$, and $B_5$. The bitmap of the control signal represents resource blocks (RBs) within a service bandwidth (BW) in an FD. Bit m may correspond to RB m. For example, when the control signal is assigned to RB m, $B_m=1$, and, when the control signal is not assigned, $B_m=0$. Here, m is an integer equal to or greater than 0. The power of a resource block may be expressed as Equation 1 below. In other words, the third power of each resource block may be expressed as Equation 1 below.

[Equation 1]

$$P_{m,l} = \frac{1}{N_{sc}^{RB}} \sum_{k=0}^{N_{sc}^{RB}-1} \left| y_{k+N_{sc}^{RB}m,l} \right|^2$$

$y_{k,l}$ refers to a reception signal for a k-th resource element and an l-th symbol. In detail, $y_{k,l}$ may be an output of the FFT module 320 for the k-th resource element and the l-th symbol. k is a resource element index. l is a symbol index. In Equation 1, $N_{sc}^{RB}$ which is the number of resource elements REs included in one RB, is 12. m indicates a bitmap index of the control signal. m is an integer equal to or greater than 0 and less than or equal to B-1. B indicates a control signal bitmap size and is a positive integer.

The power of an REG bundle may be expressed as Equation 2 below. In other words, the first power of each REG bundle may be expressed as Equation 2 below.

[Equation 2]

$$P_r = \frac{1}{R} \sum_{l=0}^{L-1} \sum_{m=0}^{R/L-1} P_{m+rR/L,l}$$

In Equation 2, Pr indicates the power of an REG bundle. L indicates the number of orthogonal frequency-division multiplexing (OFDM) symbols to which the control signal is allocated. R indicates the bundle size of the REG bundle (e.g. the number of resource blocks within the resource element group bundle). Control signals may be assigned to L OFDM symbols, but control signals may be assigned to L or fewer OFDM symbols for control signal energy detection. For example, when a control signal is allocated to only one OFDM symbol having the smallest symbol index, the processing time for controlling signal energy detection may be the shortest and a power consumption effect may be the greatest.

A largest power among powers of REG bundles may be expressed as Equation 3 below. In other words, the second power Pmax may be expressed as Equation 3 below.

[Equation 3]

$$P_{\max} = \max_{0 \le r < R} P_r$$

The control channel including the control signal according to embodiments may include a plurality of CORESETs. Referring to FIGS. 4C and 4D, a CORESET size may be 2 according to embodiments. For convenience of explanation, CORESET 0 in FIG. 4C is referred to as the first CORESET, CORESET 1 in FIG. 4D is referred to as the second CORESET, and the number of CORESETs may vary depending on embodiments. FIG. 4A may be an example for a case where the CORESET size is 1.

Each of the first CORESET and the second CORESET may include $B_0$, $B_1$, $B_2$, $B_3$, $B_4$, $B_5$, $B_6$, $B_7$, $B_8$, $B_9$, $B_{10}$, $B_{11}$, and $B_{12}$. Referring to FIG. 4C, in the first CORESET, a control signal is assigned to one OFDM symbol (L=1) and a bundle size R of a REG bundle is 2. Referring to FIG. 4D, in the second CORESET, control signals are assigned to two OFDM symbols (L=2) and R is 6. The first CORESET includes 5 REG bundles each having a REG bundle size of 2, and the second CORESET includes 3 REG bundles each having a REG bundle size of 6. The wireless communication device 200 may perform power measurements on a symbol with a symbol index I of 0 in the first CORESET and may perform power measurements on symbols with symbol indexes I of 1 and 2 in the second CORESET.

Referring to FIG. 4C, an RB with a pattern in the first CORESET may be assigned 1. In detail, $B_1$, $B_2$, $B_3$, $B_4$, $B_6$, $B_7$, $B_8$, $B_9$, $B_{10}$, and $B_{11}$ may be assigned 1 in a bitmap. In other words, Bm=1 (m=1, 2, 3, 4, 6, 7, 8, 9, 10, and 11). The wireless communication device 200 may measure power $\{P_{1,0}, P_{2,0}, P_{3,0}, P_{4,0}, P_{6,0}, P_{7,0}, P_{8,0}, P_{9,0}, P_{10,0}, P_{11,0}\}$ of the resource blocks of the first CORESET, based on Equation 1. The wireless communication device 200 may obtain power $\{P_0, P_1, P_2, P_3, P_4\}$ of the REG bundles of the first CORESET, based on Equation 2. Because the power of the REG bundles of the first CORESET is power of the first CORESET (CORESET 0), the power may be expressed as

$$\{P_0^0, P_1^0, P_2^0, P_3^0, P_4^0\}.$$

Referring to FIG. 4D, an RB with a pattern in the second CORESET may be assigned 1. In detail, $B_1$, $B_2$, $B_3$, $B_4$, $B_5$, $B_6$, $B_8$, $B_9$, and $B_{10}$ may be assigned 1 in the bitmap. Bm=1 (m=1, 2, 3, 4, 5, 6, 8, 9, 10). The wireless communication device 200 may measure power $\{P_{1,0}, P_{2,0}, P_{3,0}, P_{4,0}, P_{5,0}, P_{6,0}, P_{8,0}, P_{9,0}, P_{10,0}, P_{1,1}, P_{2,1}, P_{3,1}, P_{4,1}, P_{5,1}, P_{6,1}, P_{8,1}, P_{9,1}, P_{10,1}\}$ of the resource blocks of the second CORESET, based on Equation 1. The wireless communication device 200 may obtain power $\{P_0, P_1, P_2\}$ of the REG bundles of the second CORESET, based on Equation 2. Because the power of the REG bundles of the second CORESET is power for the second CORESET (CORESET 1), the power may be expressed as $\{P_0^1, P_1^1, P_2^1\}.$

The wireless communication device 200 may select the largest power Pmax among the respective powers of the REG bundles $\{P_0^0, P_1^0, P_2^0, P_3^0, P_4^0, P_0^1, P_1^1, P_2^1\}$ of the first CORESET and the second CORESET, based on Equation 4 below.

[Equation 4]

$$P_{\max} = \max_{0 \le c < C, 0 \le r < R} P_r^c$$

In Equation 4, $c$ is a CORESET index, $C$ is the total number of CORESETs, $r$ is a REG index, $R$ is the total number of REGs in a given CORESET, and $P_r^c$ is the power for REG $r$ in CORESET $c$.

The wireless communication device 200 may compare the largest power Pmax with threshold power $P_{th}$. When the largest power Pmax is greater than the threshold power $P_{th}$, the wireless communication device 200 may generate the sleep signal SIG_MS and transmit the sleep signal SIG_MS to blocks related to reception of the control signal.

The threshold power $P_{th}$ according to embodiments may be expressed as Equation 5 below.

[Equation 5]

$$P_{\text{th}} = P_{\text{target}} - G - P_{\text{m}} \quad [\text{dBm}]$$

The reception signal may be amplified by a gain G [dB]. For example, the wireless communication device 200 may include an auto-gain controller (AGC), and the reception signal may be amplified by G [dB] by the AGC. $P_{\text{target}}$ [dBm] refers to the average level of the reception signal (in decibel-milliwatts). Pth [dBm] (the threshold power in decibel-milliwatts) may be determined based on the power when the control signal is present. Pm [dB] is a power margin value (in decibel-milliwatts) to ensure stable detection performance (or improve the stability of detection performance), and the wireless communication device 200 may select a value of 0 [dB] or more. The power margin value may be determined based on an SINR (e.g., an SINR of the reception signal and/or the control signal).

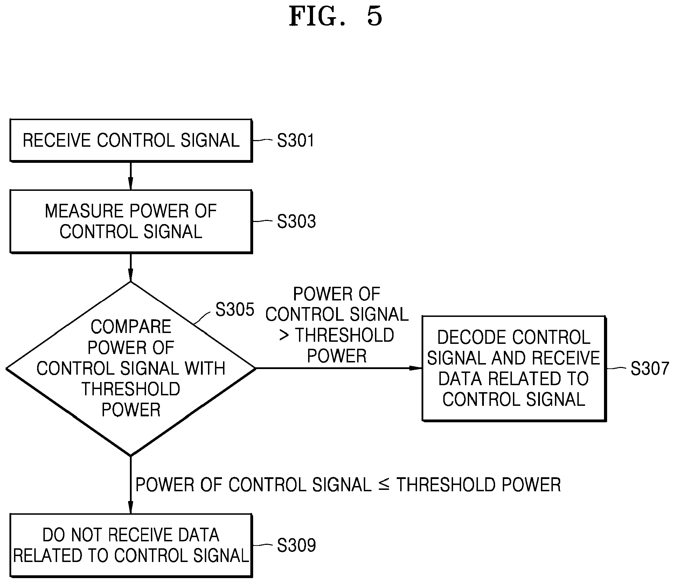

FIG. 5 is a flowchart of an operation, performed by a wireless communication device, of determining whether to receive data based on control signal energy detection, according to embodiments.

Referring to FIG. 5, in operation S301, the wireless communication device 200 may receive the control signal.

In operation S303, the wireless communication device 200 may measure the power of the control signal.

In operation S305, the wireless communication device 200 may compare the power of the control signal with the threshold power.

In operation S307, when (e.g., in response to determining) the power of the control signal is greater than the threshold power, the wireless communication device 200 may decode the control signal and may receive data related to the control signal.

For example, when (e.g., in response to determining) the power of the control signal is greater than the threshold power, the wireless communication device 200 may decode the DCI of the PDCCH and receive a physical downlink shared channel (PDSCH) related to the DCI. According to embodiments, for example, the wireless communication device 200 may obtain and/or process a data signal received via the PDSCH using the DCI obtained by decoding the control signal received via the PDCCH.

In operation S309, when (e.g., in response to determining) the power of the control signal is less than or equal to the threshold power, the wireless communication device 200 may not decode the control signal and may not receive the data related to the control signal.

In other words, the wireless communication device 200 may determine presence or absence of control information by measuring the power of the control signal and may not receive the data when there is no control information. For example, when the power of the control signal is less than or equal to the threshold power, the wireless communication device 200 may not receive the PDSCH.

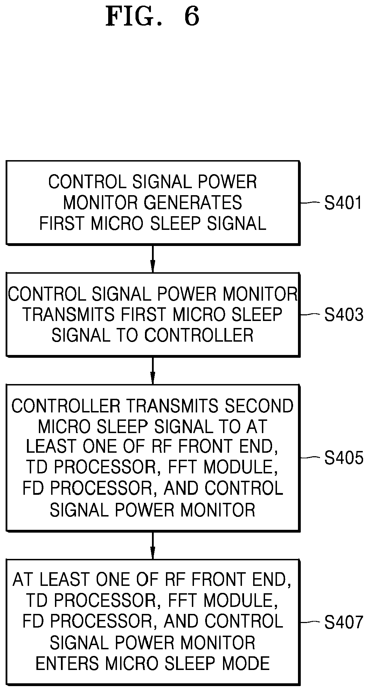

FIG. 6 is a flowchart of an operation, performed by a wireless communication device, of entering a sleep mode, according to embodiments. FIG. 6 will now be described in conjunction with FIG. 2.

Referring to FIG. 6, in operation S401, the control signal power monitor 210 may generate a first micro sleep signal. The first micro sleep signal may refer to the sleep signal SIG_MS generated by the control signal power monitor 210.

In operation S403, the control signal power monitor 210 may transmit the first micro sleep signal to the controller 220.

In operation S405, the controller 220 may transmit a second micro sleep signal to at least one of the RF front end 240, the TD processor 310, the FFT module 320, the FD processor 330, and/or the control signal power monitor 210. The second micro sleep signal may refer to the sleep signal SIG_MS that the controller 220 transmits to at least one of the RF front end 240, the TD processor 310, the FFT module 320, the FD processor 330, and/or the control signal power monitor 210.

In operation S407, at least one of the RF front end 240, the TD processor 310, the FFT module 320, the FD processor 330, and/or the control signal power monitor 210 may enter the micro sleep mode. In detail, the RF front end 240 may receive the second micro sleep signal and may power off. The TD processor 310, the FFT module 320, the FD processor 330, and/or the control signal power monitor 210 may receive the second micro sleep signal and then may enter a sleep mode in which an operation related to reception of the control signal is not performed.

According to the above description, in the wireless communication device 300 according to the inventive concepts, the sleep signal SIG_MS may be generated before the control signal is decoded.

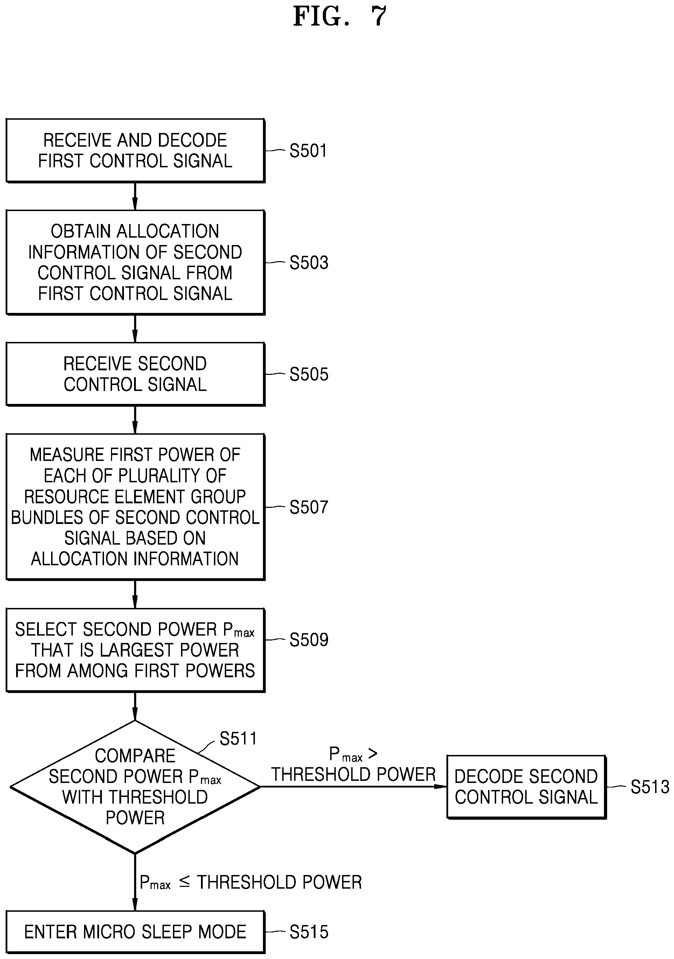

FIG. 7 is a flowchart of an operation of a wireless communication device according to embodiments. FIG. 7 will now be described in conjunction with FIG. 2.

Referring to FIG. 7, in operation S501, the wireless communication device 200 may receive and decode the first control signal.

In operation S503, the wireless communication device 200 may obtain allocation information of the second control signal from the first control signal. According to embodiments, the first control signal may be a common search space (CSS), and the second control signal may be a user equipment-specific search space (USS). According to embodiments, for example, the wireless communication device 200 may obtain the CORESET's FD resource allocation information and/or the CORESET's TD resource allocation information from the decoded first control signal. The CORESET's FD resource allocation information may be bitmap information. According to embodiments, the RRC signal, and/or the CORESET's FD and/or TD resource allocation information may indicate the plurality of REG bundles of the second control signal.

In operation S505, the wireless communication device 200 may receive the second control signal.

In operation S507, the wireless communication device 200 may measure the first power of each of the plurality of REG bundles of the second control signal based on the allocation information. According to embodiments, the wireless communication device 200 may measure at least one power amount (e.g., a signal power magnitude, a signal power amplitude, a signal power level, etc.) of the second control signal. According to embodiments, the wireless communication device 200 may measure a power amount of each respective resource element group (REG) among a plurality of REG bundles of the second control signal. According to embodiments, the wireless communication device 200 may determine location information of the plurality of REG bundles of the second control signal (e.g., time and/or frequency information) based on the allocation information.

In operation S509, the wireless communication device 200 may select the second power Pmax, which has the largest power among first powers.

In operation S511, the wireless communication device 200 may compare the second power Pmax with the threshold power (e.g., the threshold power value). The threshold power may be determined based on an SINR. For example, the threshold power may be determined based on at least one of determined powers, an average power level of the second control signal, a gain of the second control signal, and/or the SINR (e.g., the SINR of the second control signal).

In operation S513, the wireless communication device 200 may determine to decode the second control signal, based on a result of the comparison.

When the second power Pmax is greater than the threshold power, the wireless communication device 200 may decode the second control signal.

When the second power Pmax is less than or equal to the threshold power, the wireless communication device 200 may generate the sleep signal SIG_MS, and transmit the same to reception blocks to thereby enter the micro sleep mode, in operation S515. In other words, the wireless communication device 200 may not decode the second control signal.

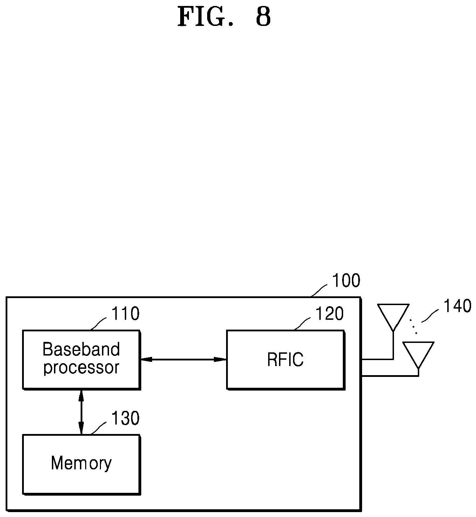

FIG. 8 is a block diagram of a wireless communication device 100 according to embodiments.

Referring to FIG. 8, the wireless communication device 100 according to embodiments includes a baseband processor 110, a radio frequency integrated circuit (RFIC) 120, a memory 130, and/or an antenna 140.

For example, the baseband processor 110 may receive a control signal through the antenna 140 and the RFIC 120. The baseband processor 110 may measure first power of each of a plurality of REG bundles of the control signal, select second power that is largest from among pieces of first power, compare the second power with threshold power, and generate a first sleep signal based on a result of the comparison. When the second power is less than or equal to the threshold power, the baseband processor 110 may allow circuits related to internal control signal reception to enter a sleep mode by using the first sleep signal and may transmit the first sleep signal to the RFIC 120. The RFIC 120 may receive the first sleep signal and may power off.

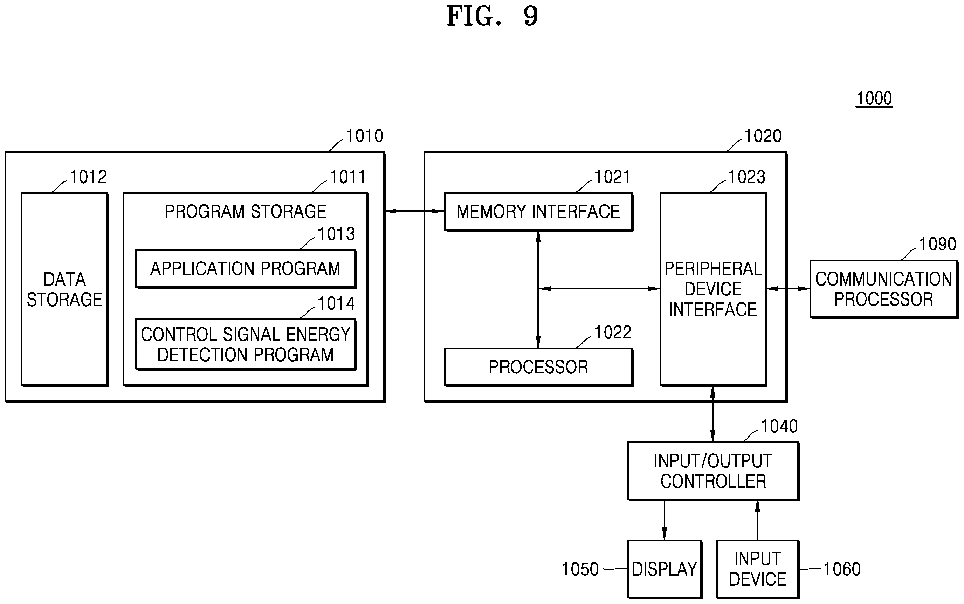

FIG. 9 is a block diagram of an electronic device 1000 according to embodiments.

Referring to FIG. 9, the electronic device 1000 may include a memory 1010, a processor unit 1020, an input/output controller 1040, a display 1050, an input device 1060, and/or a communication processor 1090. There may be a plurality of memories 1010. Each element will be described below.

The memory 1010 may include a program storage 1011, which stores a program for controlling an operation of the electronic device 1000, and/or a data storage 1012, which stores data generated during execution of the program. The data storage 1012 may store data for respective operations of an application program 1013 and a control signal energy detection program 1014. The program storage 1011 may include (e.g., store) the application program 1013 and the control signal energy detection program 1014. A program included in the program storage 1011 is a set of instructions, and may be expressed as an instruction set.

The application program 1013 includes an application program that operates in the electronic device 1000. In other words, the application program 1013 may include an instruction of an application run by the processor 1022. The control signal energy detection program 1014 may include instructions for detecting the energy of a control signal according to embodiments.

A peripheral device interface 1023 may control connection between a peripheral device including the input/output controller 1040, and a processor 1022 and a memory interface 1021. The processor 1022 controls the electronic device 1000 to provide a service by using at least one software program. At this time, the processor 1022 may execute at least one program stored in the memory 1010 to provide a service corresponding to the program.

The input/output controller 1040 may provide an interface between an input/output device, such as the display 1050 or the input device 1060, and the peripheral device interface 1023. The display 1050 displays status information, input text, a moving picture, and/or a still picture, for example. For example, the display 1050 may display information about an application program run by the processor 1022.

The input device 1060 may provide input data, which is generated by the selection of the electronic device 1000, to the processor unit 1020 through the input/output controller 1040. In this case, the input device 1060 may include, for example, a keypad, which includes at least one hardware button, and/or a touch pad sensing touch information. For example, the input device 1060 may provide touch information, such as a touch, movement of the touch, and/or the release of the touch, which is detected through a touch pad, to the processor 1022 through the input/output controller 1040. The communication processor 1090 of the electronic device 1000 may perform communication functions for voice communication and data communication.

Conventional devices and methods for performing wireless communication perform decoding on every control signal received. However, only some of the received control signals contain control information (e.g., DCI) while others of the received control signals contain no control information. Accordingly, by decoding all of the received control signals, the conventional devices and methods consume excessive resources (e.g., power, processor, memory, etc.) in circumstances in which a received control signal does not contain control information.

However, according to embodiments, improved devices and methods are provided for performing wireless communication. For example, the improved devices and methods may determine whether control information is contained in a received control signal by measuring a power amount of at least one resource block (e.g., resource blocks corresponding to time/frequency resources at which control information would be provided if present) and comparing the power amount to a threshold power value indicative of the presence of the control information. The improved devices and methods may only decode the control signal in response to determining that control information is included in the control signal. Otherwise, the improved devices and methods may skip the decoding and/or enter a sleep mode. Accordingly, the improved devices and methods overcome the deficiencies of the conventional devices and methods to at least reduce resource consumption (e.g., power, processor, memory, etc.).

According to embodiments, operations described herein as being performed by the wireless communication device 200, the control signal power monitor 210, the controller 220, the signal processor 230, the RF front end 240, the control signal power measurement circuit 211, the power comparison circuit 212, the wireless communication device 300, the TD processor 310, the FFT module 320, the FD processor 330, the auto-gain controller (AGC), the wireless communication device 100, the baseband processor 110, the RFIC 120, the electronic device 1000, the processor unit 1020, the input/output controller 1040, the communication processor 1090, the peripheral device interface 1023, the processor 1022 and/or the memory interface 1021 may be performed by processing circuitry. The term 'processing circuitry,' as used in the present disclosure, may refer to, for example, hardware including logic circuits; a hardware/software combination such as a processor executing software; or a combination thereof. For example, the processing circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

The various operations of methods described above may be performed by any suitable device capable of performing the operations, such as the processing circuitry discussed above. For example, as discussed above, the operations of methods described above may be performed by various hardware and/or software implemented in some form of hardware (e.g., processor, ASIC, etc.).

The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or operations of a method or algorithm and functions described in connection with embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

As used herein the term "and/or" includes any and all combinations of one or more of the associated listed items. Embodiments may be described with reference to acts and symbolic representations of operations (e.g., in the form of flow charts, flow diagrams, data flow diagrams, structure diagrams, block diagrams, etc.) that may be implemented in conjunction with units and/or devices discussed in more detail herein. Although discussed in a particular manner, a function or operation specified in a specific block may be performed differently from the flow specified in a flowchart, flow diagram, etc. For example, functions or operations illustrated as being performed serially in two consecutive blocks may actually be performed concurrently, simultaneously, contemporaneously, or in some cases be performed in reverse order. Further, operations described in connection with a given series of operations (e.g., flow chart) described herein may be combined with and/or replace operations described in connection with one or more other series of operations described herein.

Embodiments are set out in the following clauses:

Clause 1. An operation method of a wireless communication device, the operation method comprising:
receiving a control signal;

measuring a power amount of each respective resource element group, REG, among a plurality of REGs to obtain a plurality of power amounts, the plurality of REGs being included in the control signal;
comparing a largest power amount with a threshold power value, the largest power amount being a highest power amount among the plurality of power amounts; and
decoding the control signal in response to determining the largest power amount is greater than the threshold power value.

Clause 2. The operation method of clause 1, wherein

the control signal is a first control signal;
the plurality of power amounts are a plurality of first power amounts; and
the method further comprises
receiving a second control signal,
measuring a power amount of each respective REG among the plurality of REGs of the second control signal to obtain a plurality of second power amounts,
comparing a largest second power amount with the threshold power value, the largest second power amount being a highest power amount among the plurality of second power amounts, and
skipping decoding of the second control signal in response to determining the largest second power amount is less than or equal to the threshold power value.

Clause 3. The operation method of clause 1, wherein

the control signal is a first control signal;
the plurality of power amounts are a plurality of first power amounts; and the method further comprises
receiving a second control signal,
measuring a power amount of each respective REG among the plurality of REGs of the second control signal to obtain a plurality of second power amounts,
comparing a largest second power amount with threshold power value, the largest second power amount being a highest power amount among the plurality of second power amounts, and
skipping receiving of data related to the second control signal in response to determining the largest second power amount is not greater than the threshold power value.

Clause 4. The operation method of any preceding clause, further comprising: receiving data related to the control signal in response to determining the largest power amount is greater than the threshold power value.

Clause 5. The operation method of any preceding clause, wherein the measuring comprises:

measuring a power amount of each of a plurality of resource blocks, RBs, of the control signal; and
calculating the power amount of each respective REG among the plurality of REGs based on the power amount of each of the plurality of RBs of the control signal.

Clause 6. The operation method of any preceding clause, wherein

the plurality of REGs comprise first REGs and second REGs;
the first REGs are included in a first Control Resource Set, CORESET;
the second REGs are included in a second CORESET;
the measuring comprises:

measuring a power amount of each of the first REGs, and
measuring a power amount of each of the second REGs; and
the largest power amount is the highest power amount among the power amount of each of the first REGs and the power amount of each of the second REGs.

Clause 7. The operation method of any preceding clause, wherein the threshold power value is based on a signal-to-interference-plus-noise ratio, SINR.

Clause 8. The operation method of any preceding clause, wherein the threshold power value is based on at least one an average power level of the control signal, a gain of the control signal, or a signal-to-interference-plus-noise ratio, SINR.

Clause 9. An operation method of a wireless communication device, the operation method comprising:
receiving and decoding a first control signal to obtain a decoded first control signal;

obtaining allocation information of a second control signal from the decoded first control signal;
measuring a power amount of each respective resource element group, REG, among a plurality of REGs to obtain a plurality of power amounts, the plurality of REGs being included in the second control signal, and the measuring being performed based on the allocation information;
comparing a first power amount with a threshold power value to obtain a comparison result, the first power amount being a largest power amount among the plurality of power amounts; and
determining whether to decode the second control signal based on the comparison result.

Clause 10. The operation method of clause 9, further comprising:
skipping the decoding of the second control signal in response to determining the first power amount is not greater than the threshold power value.

Clause 11. The operation method of clause 9 or clause 10, further comprising: decoding the second control signal in response to determining the first power amount is greater than the threshold power value.

Clause 12. The operation method of any of clauses 9-11, wherein

the first control signal is included in a Common Search Space, CSS; and
the second control signal is included in a user equipment-specific Search Space, USS.

Clause 13. The operation method of any of clauses 9-12, wherein the threshold power value is based on a signal-to-interference-plus-noise ratio, SINR.

Clause 14. The operation method of any of clauses 9-13, wherein the threshold power value is based on at least one of an average power level of the second control signal, a gain of the second control signal, or a signal-to-interference-plus-noise ratio, SINR.

Clause 15. A wireless communication device comprising:

processing circuitry configured to
receive a control signal,

measure a power amount of each respective resource element group, REG, among a plurality of REGs to obtain a plurality of power amounts, the plurality of REGs being included in the control signal,
compare a first power amount with threshold power value to obtain a comparison result, the first power amount being a largest power amount among the plurality of power amounts,
cause at least a portion of the wireless communication device to enter a sleep mode based on the comparison result, and skip decoding of the control signal based on the at least the portion of the wireless communication device entering the sleep mode.

While the inventive concepts have been particularly shown and described with reference to embodiments thereof, it will be understood that various changes in form and details may be made therein without departing from the scope of the following claims.

**Claims**

1. An operation method of a wireless communication device, the operation method comprising:

   receiving a control signal;
   measuring a power amount of each respective resource element group, REG, bundle among a plurality of REG bundles to obtain a plurality of power amounts, the plurality of REG bundles being included in the control signal;
   comparing a largest power amount with a threshold power value, the largest power amount being a highest power amount among the plurality of power amounts; and
   decoding the control signal in response to determining the largest power amount is greater than the threshold power value.

2. The operation method of claim 1, wherein

   the control signal is a first control signal;
   the plurality of power amounts are a plurality of first power amounts; and
   the method further comprises

      receiving a second control signal,
      measuring a power amount of each respective REG bundle among the plurality of REG bundles of the second control signal to obtain a plurality of second power amounts,
      comparing a largest second power amount with the threshold power value, the largest second power amount being a highest power amount among the plurality of second power amounts, and
      skipping decoding of the second control signal in response to determining the largest second power amount is less than or equal to the threshold power value.

3. The operation method of claim 1, wherein

   the control signal is a first control signal;
   the plurality of power amounts are a plurality of first power amounts; and
   the method further comprises

      receiving a second control signal,
      measuring a power amount of each respective REG bundle among the plurality of REG bundles of the second control signal to obtain a plurality of second power amounts,
      comparing a largest second power amount with threshold power value, the largest second power amount being a highest power amount among the plurality of second power amounts, and
      skipping receiving of data related to the second control signal in response to determining the largest second power amount is not greater than the threshold power value.

4. The operation method of any preceding claim, further comprising:
   receiving data related to the control signal in response to determining the largest power amount is greater than the threshold power value.

5. The operation method of any preceding claim, wherein the measuring comprises:

   measuring a power amount of each of a plurality of resource blocks, RBs, of the control signal; and
   calculating the power amount of each respective REG bundle among the plurality of REG bundles based on the power amount of each of the plurality of RBs of the control signal.

6. The operation method of any preceding claim, wherein

   the plurality of REG bundles comprise first REG bundles and second REG bundles;
   the first REG bundles are included in a first Control Resource Set, CORESET;
   the second REG bundles are included in a second CORESET;
   the measuring comprises:

      measuring a power amount of each of the first REG bundles, and

measuring a power amount of each of the second REG bundles; and

the largest power amount is the highest power amount among the power amount of each of the first REG bundles and the power amount of each of the second REG bundles.

7. The operation method of any preceding claim, wherein the threshold power value is based on a signal-to-interference-plus-noise ratio, SINR.

8. The operation method of any preceding claim, wherein the threshold power value is based on at least one an average power level of the control signal, a gain of the control signal, or a signal-to-interference-plus-noise ratio, SINR.

9. An operation method of a wireless communication device, the operation method comprising:

receiving and decoding a first control signal to obtain a decoded first control signal;
obtaining allocation information of a second control signal from the decoded first control signal;
measuring a power amount of each respective resource element group, REG, bundle among a plurality of REG bundles to obtain a plurality of power amounts, the plurality of REG bundles being included in the second control signal, and the measuring being performed based on the allocation information;
comparing a first power amount with a threshold power value to obtain a comparison result, the first power amount being a largest power amount among the plurality of power amounts; and
determining whether to decode the second control signal based on the comparison result.

10. The operation method of claim 9, further comprising:
skipping the decoding of the second control signal in response to determining the first power amount is not greater than the threshold power value.

11. The operation method of claim 9 or claim 10, further comprising:
decoding the second control signal in response to determining the first power amount is greater than the threshold power value.

12. The operation method of any of claims 9-11, wherein

the first control signal is included in a Common Search Space, CSS; and
the second control signal is included in a user equipment-specific Search Space, USS.

13. The operation method of any of claims 9-12, wherein the threshold power value is based on a signal-to-interference-plus-noise ratio, SINR.

14. The operation method of any of claims 9-13, wherein the threshold power value is based on at least one of an average power level of the second control signal, a gain of the second control signal, or a signal-to-interference-plus-noise ratio, SINR.

15. A wireless communication device comprising:
processing circuitry configured to

receive a control signal,
measure a power amount of each respective resource element group, REG, bundle among a plurality of REG bundles to obtain a plurality of power amounts, the plurality of REG bundles being included in the control signal,
compare a first power amount with threshold power value to obtain a comparison result, the first power amount being a largest power amount among the plurality of power amounts,
cause at least a portion of the wireless communication device to enter a sleep mode based on the comparison result, and skip decoding of the control signal based on the at least the portion of the wireless communication device entering the sleep mode.

# FIG. 1

# FIG. 2A

# FIG. 2B

# FIG. 3

RECEIVE CONTROL SIGNAL — S101

↓

MEASURE POWER OF CONTROL SIGNAL — S103

↓

COMPARE POWER OF CONTROL SIGNAL WITH THRESHOLD POWER — S105

POWER OF CONTROL SIGNAL > THRESHOLD POWER → DECODE CONTROL SIGNAL — S107

POWER OF CONTROL SIGNAL ≤ THRESHOLD POWER

ENTER MICRO SLEEP MODE — S109

# FIG. 4A

RECEIVE CONTROL SIGNAL — S201

↓

MEASURE FIRST POWER OF EACH OF PLURALITY OF RESOURCE ELEMENT GROUP BUNDLES OF CONTROL SIGNAL — S203

↓

SELECT SECOND POWER $P_{max}$ THAT IS LARGEST POWER FROM AMONG FIRST POWERS — S205

↓

COMPARE SECOND POWER $P_{max}$ WITH THRESHOLD POWER — S207

$P_{max}$ > THRESHOLD POWER → DECODE CONTROL SIGNAL — S209

$P_{max}$ ≤ THRESHOLD POWER

↓

ENTER MICRO SLEEP MODE — S211

# FIG. 4B

Frequency

$B_5$

$B_4$

$B_3$

$B_2$

$B_1$

$B_0$

0   1   2   Time

☐ No Pattern
▨ REG bundle0
▧ REG bundle1

# FIG. 4C

# FIG. 4D

# FIG. 5

RECEIVE CONTROL SIGNAL — S301

↓

MEASURE POWER OF CONTROL SIGNAL — S303

↓

COMPARE POWER OF CONTROL SIGNAL WITH THRESHOLD POWER — S305

POWER OF CONTROL SIGNAL > THRESHOLD POWER →

DECODE CONTROL SIGNAL AND RECEIVE DATA RELATED TO CONTROL SIGNAL — S307

POWER OF CONTROL SIGNAL ≤ THRESHOLD POWER

DO NOT RECEIVE DATA RELATED TO CONTROL SIGNAL — S309

# FIG. 6

```
┌─────────────────────────────┐
│     CONTROL SIGNAL POWER    │
│      MONITOR GENERATES      │── S401
│    FIRST MICRO SLEEP SIGNAL │
└─────────────────────────────┘
               │
               ▼
┌─────────────────────────────┐
│  CONTROL SIGNAL POWER MONITOR│
│   TRANSMITS FIRST MICRO SLEEP│── S403
│      SIGNAL TO CONTROLLER    │
└─────────────────────────────┘
               │
               ▼
┌─────────────────────────────┐
│  CONTROLLER TRANSMITS SECOND │
│    MICRO SLEEP SIGNAL TO AT  │
│   LEAST ONE OF RF FRONT END, │
│   TD PROCESSOR, FFT MODULE,  │── S405
│   FD PROCESSOR, AND CONTROL  │
│      SIGNAL POWER MONITOR    │
└─────────────────────────────┘
               │
               ▼
┌─────────────────────────────┐
│  AT LEAST ONE OF RF FRONT END,│
│   TD PROCESSOR, FFT MODULE,  │
│   FD PROCESSOR, AND CONTROL  │── S407
│      SIGNAL POWER MONITOR    │
│    ENTERS MICRO SLEEP MODE   │
└─────────────────────────────┘
```

# FIG. 7

```
┌─────────────────────────┐
│  RECEIVE AND DECODE      │ ─── S501
│  FIRST CONTROL SIGNAL    │
└─────────────────────────┘
            │
            ▼
┌─────────────────────────┐
│  OBTAIN ALLOCATION       │
│  INFORMATION OF SECOND   │ ─── S503
│  CONTROL SIGNAL FROM     │
│  FIRST CONTROL SIGNAL    │
└─────────────────────────┘
            │
            ▼
┌─────────────────────────┐
│  RECEIVE SECOND          │ ─── S505
│  CONTROL SIGNAL          │
└─────────────────────────┘
            │
            ▼
┌─────────────────────────┐
│  MEASURE FIRST POWER OF  │
│  EACH OF PLURALITY OF    │
│  RESOURCE ELEMENT GROUP  │ ─── S507
│  BUNDLES OF SECOND CONTROL│
│  SIGNAL BASED ON         │
│  ALLOCATION INFORMATION  │
└─────────────────────────┘
            │
            ▼
┌─────────────────────────┐
│  SELECT SECOND POWER Pmax│ ─── S509
│  THAT IS LARGEST POWER   │
│  FROM AMONG FIRST POWERS │
└─────────────────────────┘
            │
            ▼
```

COMPARE SECOND POWER $P_{max}$ WITH THRESHOLD POWER — S511

$P_{max} >$ THRESHOLD POWER → DECODE SECOND CONTROL SIGNAL — S513

$P_{max} \leq$ THRESHOLD POWER

ENTER MICRO SLEEP MODE — S515

# FIG. 8

FIG. 9

Europäisches
Patentamt

European
Patent Office

Office européen
des brevets

# EUROPEAN SEARCH REPORT

Application Number

EP 24 17 7281

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/014397 A1 (TAHERZADEH BOROUJENI MAHMOUD [US] ET AL) 13 January 2022 (2022-01-13) * paragraphs [0025] - [0028]; claim 1; figure 8 * * paragraphs [0087] - [0090] * * paragraphs [0096] - [0107] * * paragraphs [0111] - [0136] * ----- | 1-15 | INV. H04L5/00 H04W52/02 |
| A | CN 109 660 315 A (BEIJING SPREADTRUM HIGH TECH COMMUNICATIONS TECH CO LTD) 19 April 2019 (2019-04-19) * paragraphs [0046] - [0047] * ----- | 1-15 | |
| | | | TECHNICAL FIELDS SEARCHED (IPC) H04L H04W |

The present search report has been drawn up for all claims

| Place of search | Date of completion of the search | Examiner |
|---|---|---|
| The Hague | 1 October 2024 | Losada Corderí, Iker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 7281

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2024

| Patent document cited in search report | Publication date | Patent family member(s) | | Publication date |
|---|---|---|---|---|
| US 2022014397 A1 | 13-01-2022 | CN | 115804048 A | 14-03-2023 |
| | | EP | 4179664 A1 | 17-05-2023 |
| | | US | 2022014397 A1 | 13-01-2022 |
| | | WO | 2022011038 A1 | 13-01-2022 |
| CN 109660315 A | 19-04-2019 | NONE | | |

For more details about this annex : see Official Journal of the European Patent Office, No. 12/82